(19) **Europäisches Patentamt / European Patent Office / Office européen des brevets**

(11) **EP 3 658 853 B1**

(12) **FASCICULE DE BREVET EUROPEEN**

(45) Date de publication et mention de la délivrance du brevet:
**05.06.2024 Bulletin 2024/23**

(21) Numéro de dépôt: **18765691.3**

(22) Date de dépôt: **27.07.2018**

(51) Classification Internationale des Brevets (IPC):
**G01C 17/38** *(2006.01)*   **G01C 21/20** *(2006.01)*
**G01C 21/08** *(2006.01)*   **G01C 21/16** *(2006.01)*

(52) Classification Coopérative des Brevets (CPC):
**G01C 17/38; G01C 21/08; G01C 21/1654; G01C 21/206**

(86) Numéro de dépôt international:
**PCT/FR2018/051940**

(87) Numéro de publication internationale:
**WO 2019/020961 (31.01.2019 Gazette 2019/05)**

(54) **PROCÉDÉ ET DISPOSITIF DE CARACTÉRISATION D'UN CAP DÉTERMINÉ À PARTIR DE LA MESURE DU CHAMP MAGNÉTIQUE**

**VERFAHREN UND VORRICHTUNG ZUR CHARAKTERISIERUNG EINES STEUERKURSES, DER DURCH DIE MESSUNG DES MAGNETFELDES BESTIMMT IST**

**METHOD AND DEVICE FOR CHARACTERISING A HEADING DETERMINED FROM THE MEASUREMENT OF THE MAGNETIC FIELD**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2017 FR 1757220**

(43) Date de publication de la demande:
**03.06.2020 Bulletin 2020/23**

(73) Titulaire: **SYSNAV**
**27200 Vernon (FR)**

(72) Inventeurs:
• **VISSIERE, David**
  **75009 Paris (FR)**
• **HILLION, Mathieu**
  **27200 Vernon (FR)**
• **CHESNEAU, Charles-Ivan**
  **75008 Paris (FR)**
• **DUGARD, Jean-Philippe**
  **27200 Vernon (FR)**

(74) Mandataire: **Regimbeau**
**20, rue de Chazelles**
**75847 Paris Cedex 17 (FR)**

(56) Documents cités:
• **AFZAL M H ET AL: "Assessment of Indoor Magnetic Field Anomalies using Multiple Magnetometers", GNSS 2010 - PROCEEDINGS OF THE 23RD INTERNATIONAL TECHNICAL MEETING OF THE SATELLITE DIVISION OF THE INSTITUTE OF NAVIGATION (ION GNSS 2010), THE INSTITUTE OF NAVIGATION, 8551 RIXLEW LANE SUITE 360 MANASSAS, VA 20109, USA, 24 septembre 2010 (2010-09-24), pages 525-533, XP056000464, cité dans la demande**
• **MUHAMMAD HARIS AFZAL ET AL: "Magnetic field based heading estimation for pedestrian navigation environments", INDOOR POSITIONING AND INDOOR NAVIGATION (IPIN), 2011 INTERNATIONAL CONFERENCE ON, IEEE, 21 septembre 2011 (2011-09-21), pages 1-10, XP031990162, DOI: 10.1109/IPIN.2011.6071947 ISBN: 978-1-4577-1805-2 cité dans la demande**

EP 3 658 853 B1

**Description**

## DOMAINE TECHNIQUE GÉNÉRAL ET ART ANTÉRIEUR

La présente invention concerne de façon générale les techniques magnéto-inertielles.

Plus précisément, elle concerne la détermination de cap par des magnétomètres.

Elle trouve en particulier avantageusement application dans le cas de mesures en milieu urbain ou « indoor », c'est-à-dire à l'intérieur de bâtiments.

On utilise classiquement les magnétomètres pour le calcul du cap dans des systèmes embarqués.

Dans ce cas, on fait l'hypothèse que le champ magnétique mesuré par le capteur est le champ magnétique terrestre qui pointe, pour sa composante horizontale, vers le nord magnétique. La différence entre la direction du nord magnétique et du nord géographique (appelée déclinaison magnétique) est connue et tabulée. Sans perte de généralités, on considérera donc dans la suite que le nord magnétique et le nord géographique sont confondus, et que les magnétomètres indiquent donc ce qu'on appellera le nord.

Typiquement, les méthodes de détermination utilisées pour le calcul du cap à partir des mesures de magnétomètres s'appuient sur :

- une modélisation qui relie la mesure fournie par le magnétomètre et une information relative au cap du système,
- une caractérisation de la pertinence de cette relation pour les mesures réalisées.

Dans une approche classique, le calcul mis en oeuvre peut être un filtrage de type Kalman avec le champ magnétique comme mesure, permettant de recaler le cap qui est contenu dans l'état, avec un bruit de mesure fonction de la caractérisation de la pertinence.

La modélisation consiste à écrire que le champ magnétique mesuré M contient une information de cap, par exemple par l'équation

$$M = R(\psi, \theta, \varphi)^T M_{TERRE}$$

où R est la matrice de rotation permettant de passer du référentiel de l'objet vers le référentiel inertiel terrestre, $\psi, \theta, \varphi$ les angles d'Euler et $M_{TERRE}$ le champ magnétique terrestre.

La pertinence de cette équation est caractérisée par une variance de mesure, c'est-à-dire que l'on suppose que l'erreur de cette égalité est une variable aléatoire gaussienne d'espérance nulle.

Cette variance sert à calculer automatiquement le gain de Kalman qui pondère le recalage pour tenir compte des différents bruits (bruits dynamiques liés à l'environnement externe et bruits de mesure des magnétomètres).

Dans une autre approche encore, on met en oeuvre un calcul par filtrage linéaire utilisant le même type de modélisation et de caractérisation.

Dans cette approche, c'est le réglage relatif de l'amplitude du gain de l'équation qui en caractérise la pertinence. En général, ce gain est réglé à la main. L'homme de l'art saura alors le pondérer en fonction de la pertinence de la modélisation.

Ainsi, dans ces deux approches, les paramètres caractérisant la pertinence du modèle (variance du bruit gaussien dans le cas du filtre de Kalman, gain dans le cas du filtrage linéaire) sont généralement des paramètres constants, indépendants du champ magnétique mesuré.

Il a récemment été proposé, par exemple dans les publications

- W. T. Faulkner, R. Alwood, W. T. David, and J. Bohlin, "Gps-denied pedestrian tracking in indoor environments using an imu and magnetic compass," in Proceedings of the 2010 International Technical Meeting of The Institute of Navigation, (San Diego, CA), pp. 198 - 204, January 2010.
- M. H. Afzal, V. Renaudin, and G. Lachapelle, "Magnetic field based heading estimation for pedestrian navigation environments," in 2011 International Conférence on Indoor Positioning and Indoor Navigation, (Guimaraes, Portugal), Sep 2011.

des caractérisations de la pertinence de la modélisation prenant en compte le champ magnétique mesuré. La publication M. H. Afzal, V. Renaudin, G. Lachapelle, "Assessment of indoor magnetic field anomalies using multiple magnetometers", Proceedings of the 23rd international technical meeting of the satellite division of the institute of navigation, The institute of navigation, pages 525-533 (2010) divulgue la détermination du cap magnétique où les perturbations du champ magnétique sont identifiées à l'aide de gradients du champs magnétique pour être écartées de la caractérisation du cap.

Les caractérisations ainsi réalisées ne donnent toutefois pas pleinement satisfaction.

C'est le cas en particulier dans des environnements où le champ magnétique est fortement perturbé, notamment en « indoor » ou en milieu urbain, où des perturbations magnétiques issues des courants électriques ou des éléments métalliques dans les bâtiments se superposent au champ magnétique terrestre.

**PRÉSENTATION GÉNÉRALE DE L'INVENTION**

Un but général de l'invention est de proposer une solution permettant une meilleure caractérisation de la pertinence de la modélisation utilisée, notamment dans les environnements fortement perturbés.

Notamment, l'invention propose un procédé de détermination de cap, dans lequel un champ magnétique est mesuré par au moins un magnétomètre et un cap magnétique est déterminé à partir de ladite mesure et dans lequel des moyens de calcul mettent en oeuvre un traitement calculant, pour chaque mesure de cap magnétique, une valeur de caractérisation du cap ainsi déterminé, caractérisé en ce que ladite valeur de caractérisation est fonction du gradient du champ magnétique mesuré, ladite valeur étant utilisée dans la détermination du cap.

En particulier, ladite valeur de caractérisation est une fonction monotone, préférentiellement croissante, voire strictement croissante (on prendra l'exemple d'une fonction linéaire de coefficient directement positif), d'une norme du gradient, en particulier la norme L2.

On comprend que ladite valeur de caractérisation pourrait être une fonction décroissante de la norme du gradient si par exemple on décide arbitrairement que la valeur de caractérisation à des valeurs de plus en plus basses lorsque le cap est de plus en plus perturbé.

Les moyens de calcul déterminent pour un instant d'échantillonnage donné :

- une estimation d'une prédiction de cap qui est fonction du cap déterminé à l'instant d'échantillonnage précédent,
- un recalage du cap prédit ainsi estimé en fonction d'un cap magnétique déterminé à partir de mesures de magnétomètres,

et dans lequel le recalage est déterminé en fonction de ladite valeur de caractérisation, et avantageusement toujours une fonction monotone (en particulier croissante) de la valeur de caractérisation.

Ledit recalage est donc avantageusement fonction du gradient du champ magnétique mesuré, et en particulier une fonction monotone (par composition de fonctions monotones) de la norme du gradient. De cette façon, on prend en compte le fait que, plus l'environnement est perturbé, plus le gradient est important et donc plus la mesure de cap est faussée.

Dans un mode de mise en oeuvre préférentiel, les moyens de calcul estiment l'amplitude du recalage en fonction :

- d'un modèle d'évolution des perturbations magnétiques entre deux instants d'échantillonnage et
- d'une estimation a priori de l'amplitude des perturbations.

De cette façon, le traitement prend en compte l'évolution de la perturbation de cap magnétique entre deux instants d'échantillonnage et tient compte de l'éventuelle corrélation spatiale de la perturbation due à l'environnement dans le cas d'instants d'échantillonnage successifs.

Le calcul du qui en résulte est plus fiable que dans l'art antérieur.

Notamment, pour un instant d'échantillonnage donné k +1, les moyens de calcul estiment une perturbation de cap liée en calculant

$$\psi^{(d)}[k+1] = \alpha[k](\psi^{(d)}[k] + \hat{u}[k]) + (1 - \alpha[k])\frac{\hat{u}[k]}{2} + v_{\psi^{(d)}}[k]$$

où

$$\alpha[k] = 1 - \frac{\sigma_u[k]^2}{2a[k]^2}$$

et $v_{\psi(d)}$ est une variable aléatoire gaussienne de variance

$$a[k]^2(1 - \alpha[k]^2)$$

- *k* étant l'instant d'échantillonnage précédent,
- *a*[*k*] étant un paramètre qui représente l'amplitude a priori de la perturbation magnétique,
- *û* et $\sigma_u$ étant deux paramètres calculés par les moyens de calculs comme une estimation de l'espérance et de la variance de l'évolution de la perturbation.

De façon avantageuse, les moyens de calcul estiment le paramètre *a*[*k*] comme une fonction linéaire de la norme du gradient du champ magnétique.

Le paramètre *û*[*k*] est quant à lui par exemple calculé par les moyens de calcul comme la différence entre les caps magnétiques déterminés directement à partir des sorties magnétomètres pour les instants k+1 et k, à laquelle est soustraite l'évolution de cap prédite ($\omega$[*k*]*dt*).

Le paramètre $\sigma_u$ peut être estimé comme fonction de la vitesse de déplacement ou du déplacement entre deux instants d'échantillonnage successifs.

Le traitement met par exemple en oeuvre un filtrage Kalman dont l'état a au moins comme paramètre le cap réel et la perturbation de cap magnétique ($\psi$, $\psi^{(d)}$)

La prédiction de cap peut être déterminée en fonction de mesures d'un ou plusieurs capteurs d'une centrale inertielle.

L'invention concerne en outre un dispositif détermination de cap par des capteurs magnétiques, comportant des magnétomètres et des moyens de calcul pour le calcul du cap à partir du champ magnétique mesuré par lesdits magnétomètres, caractérisé en les moyens de calcul mettent en oeuvre, pour différents instants d'échantillonnage successifs, le traitement précité.

Elle propose également un système de navigation magnéto-inertielles comportant au moins un tel dispositif de mesure de cap.

On utilise avantageusement un tel système en environnement urbain ou à l'intérieur de bâtiments.

L'invention concerne également :

- un produit programme d'ordinateur comprenant des instructions de code pour l'exécution d'un procédé du type précité, lorsque ledit programme est exécuté sur un ordinateur ;
- un moyen de stockage lisible par un équipement informatique sur lequel un produit programme d'ordinateur comprend des instructions de code pour l'exécution d'un tel procédé.

## PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :

- la figure 1 est un schéma d'équipements pour la mise en oeuvre du procédé selon l'invention ;
- la figure 2 représente plus en détail un exemple de boitier pour la mise en oeuvre du procédé selon l'invention ;
- la figure 3 illustre les étapes principales d'un procédé conforme à un mode de mise en oeuvre de l'invention.

## DESCRIPTION D'UN OU PLUSIEURS MODES DE MISE EN ŒUVRE ET DE RÉALISATION

*Généralités - Dispositif de mesure*

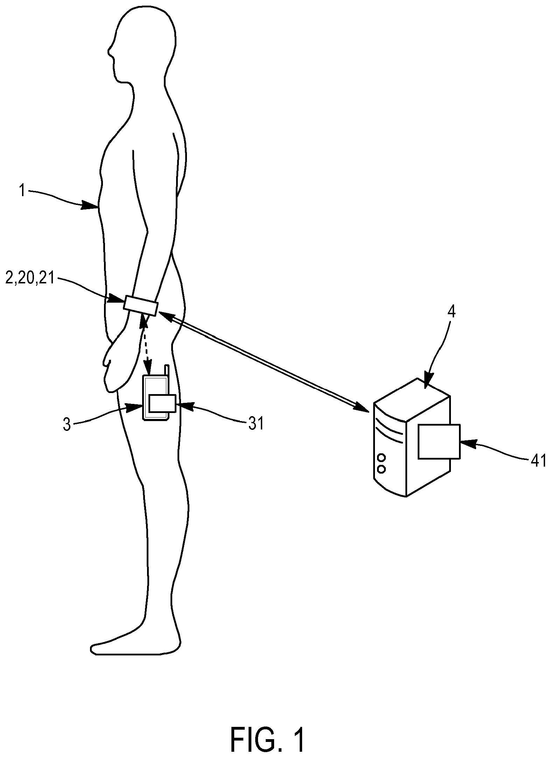

En référence à la figure 1, le dispositif de mesure proposé est par exemple utilisé pour l'estimation du mouvement d'un objet 1 évoluant dans un champ magnétique ambiant (typiquement le champ magnétique terrestre, le cas échéant légèrement altéré par les objets métalliques à proximité), noté $\vec{B}$. Comme on le sait, le champ magnétique est un champ vectoriel tridimensionnel, c'est-à-dire associant un vecteur de dimension trois à chaque point de tridimensionnel dans lequel l'objet est mobile.

Cet objet 1 peut être n'importe quel objet mobile dont la connaissance de la position est souhaitée, par exemple un véhicule à roues, un drone, etc., mais également un piéton.

L'objet 1 comporte dans un boitier 2 (support) une pluralité de capteurs de mesure magnétique 20, i.e. des magnétomètres axiaux 20. Par magnétomètre axial, on entend un élément capable de mesurer une composante dudit champ magnétique, i.e. la projection dudit vecteur champ magnétique $\vec{B}$ au niveau dudit magnétomètre 20 selon son axe.

Plus précisément, les magnétomètres 20 sont solidaires du boitier 2. Ils présentent un mouvement sensiblement identique au boitier 2 et à l'objet 1 dans le référentiel terrestre.

De façon préférée, le référentiel de l'objet 1 est muni d'un repère cartésien orthonormé dans lequel les magnétomètres 20 présentent une position prédéterminée dans ce repère.

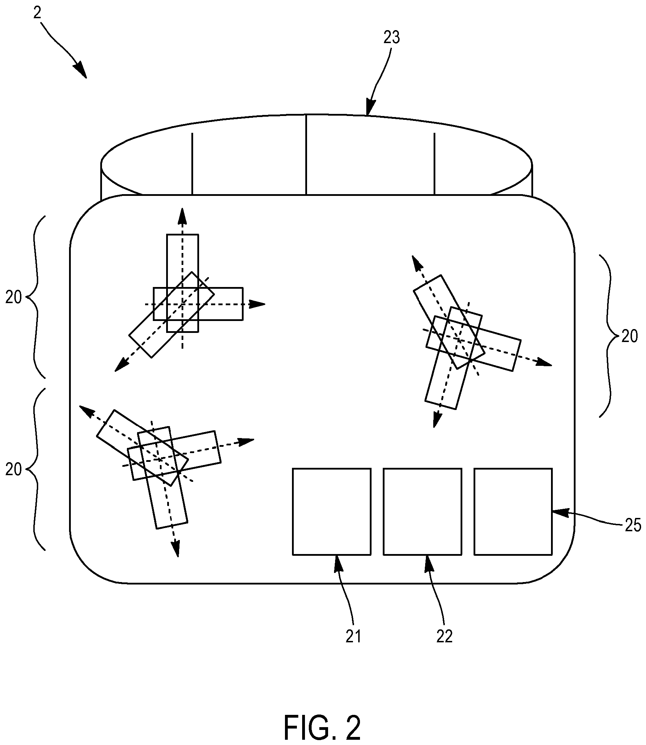

Sur la figure 2, le boitier 2 est fixé sur l'objet 1 (par exemple un membre du piéton) par des moyens d'attache 23. Ces moyens d'attache 23 consistent par exemple en un bracelet par exemple à bande autoagrippante qui enserre le membre et permet la liaison solidaire.

Bien entendu, l'invention n'est pas limitée à l'estimation du mouvement d'un piéton, mais elle est particulièrement avantageuse dans une telle utilisation car elle permet un encombrement très réduit, ce qui est nécessaire pour que le boitier soit portable par un humain de façon ergonomique.

Le boitier 2 peut comprendre des moyens de calcul 21 (typiquement un processeur) pour la mise en oeuvre directement en temps réel des traitements du présent procédé, ou bien les mesures peuvent être émises via des moyens de communication 25 vers un dispositif externe tel qu'un terminal mobile (smartphone) 3, voire un serveur distant 4, ou encore les mesures peuvent être enregistrées dans des moyens de stockage de données 22 locaux (une mémoire par exemple de type flash) mémoire locale pour un traitement a posteriori par exemple sur le serveur 4.

Les moyens de communication 25 peuvent mettre en oeuvre une communication sans fil à courte portée par exemple Bluetooth ou Wifi (en particulier dans un mode de réalisation avec un terminal mobile 3) voire être des moyens de connexion à un réseau mobile (typiquement UMTS/LTE) pour une communication à longue distance. Il est à noter que les moyens de communication 25 peuvent être par exemple une connectique filaire (typiquement USB) pour transférer les données des moyens de stockage de données 22 locaux à ceux d'un terminal mobile 3 ou d'un serveur 4.

Si c'est un terminal mobile 3 (respectivement un serveur 4) qui héberge « l'intelligence », il comprend des moyens de calcul 31 (respectivement 41) tels qu'un processeur pour la mise en oeuvre des traitements du présent procédé qui vont être décrits. Lorsque les moyens de calcul utilisés sont ceux 21 du boitier 2, celui-ci peut encore inclure des moyens de communication 25 pour transmettre la position estimée. Par exemple la position du porteur peut être envoyée au terminal mobile 3 pour afficher la position dans une interface d'un logiciel de navigation.

Les moyens de calcul de données 21, 31, 41 respectivement du boitier 2, d'un smartphone 3 et d'un serveur distant 4 peuvent indifféremment et selon les applications réaliser tout ou partie des étapes du procédé.

Ils comportent à cet effet chacun des moyens de stockage dans lesquels sont mémorisés tout ou partie de séquences d'instructions de code pour l'exécution du procédé.

### Prédiction et recalage

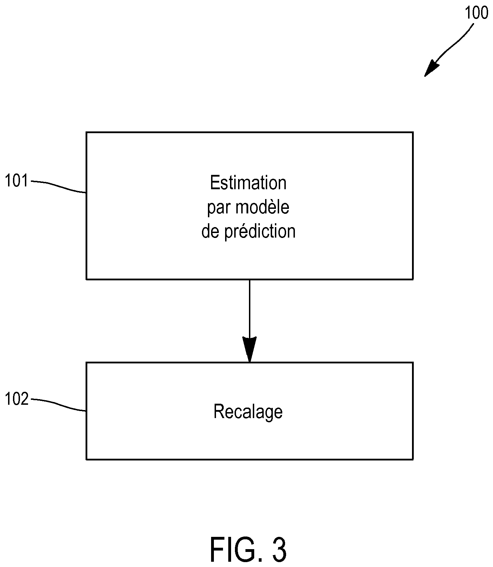

Les moyens de calcul mettent en oeuvre (figure 3) un filtrage 100 calculant d'une part une estimation de la valeur de cap par prédiction (étape 101) et d'autre part mettant en oeuvre un recalage en fonction d'une estimation d'erreur (étape 102).

Notamment, connaissant la vitesse angulaire $\omega$ donnée par exemple par un gyromètre, l'étape 101 calcule le cap $\psi_{k+1}$ à un instant k+1 comme égal à

$$\psi_{k+1} = \psi_k + \omega.\Delta t$$

où $\psi_k$ est le cap à l'instant k précédent et où $\Delta t$ est la durée séparant ces deux instants d'échantillonnage.

Le recalage 102 prend en compte les mesures réalisées par les magnétomètres 20.

Dans ce qui suit, la mesure du cap magnétique (issue des mesures des magnétomètres) pour un instant k donné est notée $z_\psi[k]$, avec

$$z_\psi[k] = \psi_k$$

Typiquement, le cap magnétique est donné par

$$z_\psi[k] = \operatorname{atan}\left(\frac{My[k]}{Mx[k]}\right)$$

où My et Mx sont deux composantes horizontales du champ magnétique dans un référentiel terrestre, ces deux composantes étant calculées en fonction de l'attitude déterminée pour l'objet 1 par une centrale inertielle de celui-ci.

Les moyens de calcul calculent le cap recalé $\psi_{k+1}^{recale}$ correspondant à l'instant k+1 comme égal à la somme du cap estimé $\psi_{k+1}$ à cet instant et d'un recalage qui est avantageusement fonction

- d'un gain $K_k$ calculé ou ajusté par rapport à l'instant k précédent
- d'une estimation de l'erreur $Err(\psi_{k+1}, z_\psi)$ entre le cap prédit $\psi_{k+1}$ et la mesure $z_\psi$

Ainsi, les moyens de calcul utilisent le cap magnétique issu de la mesure par les magnétomètres pour recaler l'état, et en particulier le cap, en calculant

$$\psi_{k+1}^{recale} = \psi_{k+1} + K_k.Err(\psi_{k+1}, z_\psi)$$

Typiquement, l'erreur $Err(\psi_{k+1}, z_\psi)$ peut être une simple différence entre le cap prédit, estimé à l'instant k+1 (avant recalage), et le cap magnétique $z_\psi$ issu des mesures des magnétomètres.

D'autres fonctions d'erreurs sont néanmoins possibles, notamment dans le cas d'un filtrage non linéaire.

En particulier, le recalage $K_k.Err(\psi_{k+1}, z_\psi)$, et plus particulièrement le gain $K_k$, peut avantageusement dépendre du gradient du champ magnétique mesuré par les magnétomètres 20. Comme expliqué précédemment, le gain $K_k$ est préférentiellement une fonction monotone, en particulier croissante, d'une norme du gradient.

De cette façon, la correction de recalage est d'autant plus importante que le champ magnétique varie fortement et est donc susceptible d'induire des erreurs importantes sur la mesure de cap.

La valeur de cap recalée ainsi obtenue est stockée par lesdits moyens de calcul 21, 31, 41 et/ou utilisée par lesdits moyens pour la suite du traitement et pour les calculs d'informations de navigation magnéto-inertielles (vitesse linéaire, vitesse angulaire, position, cap, etc...).

Egalement, elle peut être transmise par les moyens de calcul à des moyens d'interface, par exemple sur le téléphone pour être affichée sur l'écran de celui-ci.

*Modèle d'évolution des perturbations liées à l'environnement*

On détaille dans ce qui suit un exemple de calcul possible du recalage dans lequel la mesure de cap magnétique $z_\psi$ est corrigée d'une estimation de la perturbation du champ magnétique liée à l'environnement.

Le cap magnétique $z_\psi$ issu de la mesure par les magnétomètres peut en effet être considéré comme se décomposant comme suit :

$$z_\psi = \psi + \psi^{(d)} + v_{z_\psi}$$

où :

- $\psi$ correspond au cap réel que l'on cherche à déterminer,
- $v_{z_\psi}$ correspond à une erreur gaussienne de mesure et
- $\psi^{(d)}$ (« d » pour « disturbance » en anglais) correspond à une perturbation de cap magnétique lié à l'environnement (typiquement, perturbations liées aux infrastructures métalliques et aux câbles électriques dans des environnements urbains ou dans des bâtiments).

La perturbation de cap magnétique liée à l'environnement est fortement corrélée spatialement. Le champ magnétique lié aux perturbations de l'environnement est en effet un champ de vecteur continu et les champs magnétiques en deux points A et B donnés sont d'autant plus proches que ces deux points A et B sont voisins dans l'espace.

Dans un mode de mise en oeuvre, la perturbation de cap $\psi^{(d)}$ lié à l'environnement est estimée les moyens de calcul au moyen d'une formulation prenant en compte les corrélations d'évolution que l'on peut attendre pour les perturbations de champ magnétique entre deux instants d'échantillonnage successifs (corrélation temporelle, spatiale ou plus complexe).

Cette estimation est construite pour permettre un modèle markovien (qui peut être utilisé dans un filtre récursif) pour l'évolution de $\psi_d$ et

- permet de prendre en compte un modèle de l'évolution de la perturbation de cap magnétique (corrélation temporelle, spatiale ou plus complexe)
- permet de construire un modèle de filtrage pour lequel le cap est observable (sinon, on perd tout espoir de construire un estimateur de cap)

Dans l'estimation proposée, l'amplitude du recalage est estimée en fonction d'un modèle d'évolution des perturbations magnétiques entre deux instants d'échantillonnage et d'une estimation a priori de l'amplitude des perturbations.

Les inventeurs ont trouvé (et vérifié mathématiquement) que dans le cas d'une corrélation spatiale (cas de perturbations en milieu urbain ou « indoor »), une estimation adaptée de l'évolution de la perturbation $\psi^{(d)}$ entre deux instants d'échantillonnage séparés par un pas de temps avantageusement comme suit :

$$\psi^{(d)}[k+1] = \alpha[k](\psi^{(d)}[k] + \hat{u}[k]) + (1 - \alpha[k])\frac{\hat{u}[k]}{2} + v_{\psi^{(d)}}[k]$$

où

$$\alpha[k] = 1 - \frac{\sigma_u[k]^2}{2a[k]^2}$$

et $v_{\psi}^{(d)}$ est une variable aléatoire gaussienne de variance

$$\mathrm{a}[\mathrm{k}]^2(1 - \alpha[\mathrm{k}]^2)$$

- $a[k]$ étant un paramètre qui représente l'amplitude a priori de la perturbation magnétique,
- $\hat{u}$ et $\sigma_u$ étant l'espérance et la variance d'une variable aléatoire qui est un modèle (sous la forme d'une variable aléatoire gaussienne) de la variation de la perturbation de cap magnétique entre 2 instants d'échantillonnage. est une estimation prenant en compte le bruit des magnétomètres.

Cette estimation est retranchée de $z_\psi$ pour le calcul d'erreur, celle-ci pouvant être directement calculée entre $\psi_{k+1}$ et ($z_\psi$ - $\psi^{(d)}[k+1]$), ou confiée à un filtre de type Kalman qui a à la fois $\psi^{(d)}$ et $\psi$ dans son état.

*Détermination du paramètre a[k]*

Le paramètre a[k] représente l'amplitude a priori de la perturbation du cap magnétique. Il caractérise le cap et est par exemple calculé comme une fonction linéaire d'une norme du gradient du champ magnétique, ce qui est un exemple de fonction monotone.
Par exemple,

$$a[k] = a_0 + a_1 N[k]$$

avec $N[k] = \left\|\widehat{\nabla B}[k]\right\|$, c'est-à-dire la norme L2. On pourra toutefois utiliser d'autres normes comme la norme L1, la norme de Frobenius ou toute autre norme.

$a_0$ et $a_1$ étant deux paramètres préalablement fixés avant mise en oeuvre du traitement de filtrage, $\hat{B}[k]$ tant le champ magnétique à l'instant k. La fonction $a[k]$ est croissante de la norme dès lors que $a_1$ est positif.

On pourra toutefois alternativement utiliser d'autres fonctions monotones, par exemple une fonction quadratique de paramètres adéquatement choisis parmi les composantes du gradient.
De cette façon, comme indiqué plus haut, le terme de recalage $K_k.Err(\psi_{k+1}, z_\psi)$ est une fonction monotone du gain $K_k$, lui-même fonction monotone de la norme du gradient du champ magnétique mesuré par les magnétomètres 20, ce qui permet une correction efficace.
D'autres méthodes sont possibles pour déterminer le paramètre $a[k]$.
Notamment, $a[k]$ peut également être déterminé par comparaison avec un modèle du champ magnétique terrestre, par exemple en mettant en oeuvre les techniques telles que proposées dans la publication :
"Assessment of Indoor Magnetic Field Anomalies using Multiple Magnetometers Assessment of indoor" - M.H. Afzal, V. Renaudin, G. Lachapelle - Proceedings of the 23rd International Technical Meeting of The Satellite Division of the Institute of Navigation (ION GNSS 2010) September 21 - 24, 2010.
Les solutions dans lesquelles le paramètre $a[k]$ est fonction du gradient du champ magnétique permettent toutefois de meilleures corrections, et ne nécessitent pas de modèles du champ magnétique terrestre.

*Détermination du paramètre û*

Le terme $v_{\psi(d)}$ peut être considéré en première approximation comme négligeable et être considéré comme nul dans le calcul.

Le paramètre $\hat{u}[k]$ représente la valeur la plus probable pour l'évolution de la perturbation.

Ce paramètre est par exemple calculé en utilisant les gyromètres qu'on suppose bons à court terme. L'évolution la plus probable de la perturbation est alors donnée par la différence entre l'évolution de la mesure de cap magnétique et de l'évolution du cap gyrométrique :

$$
\begin{aligned}
\hat{u}[k] \quad &= \quad E\left[\psi^{(d)}[k+1] - \psi^{(d)}[k]\right] \\
&= \quad \mathrm{E}\left[\underbrace{\psi^{(d)}[k+1] + \psi[k+1]}_{cap\ magn\acute{e}tique\ mesur\acute{e}\ \grave{a}\ l'instant\, k+1} \quad - \quad \underbrace{\left(\psi^{(d)}[k] + \psi[k]\right)}_{cap\ magn\acute{e}tique\ mesur\acute{e}\ \grave{a}\ l'instant\, k} \quad - \underbrace{(\psi[k+1] - \psi[k])}_{\acute{e}volution\ de\ cap}\right] \\
&= \quad\quad\quad z_\psi[k+1] \quad\quad - \quad\quad\quad z_\psi[k] \quad\quad\quad\quad - \quad\quad \omega[k]dt
\end{aligned}
$$

où : E[.] est l'espérance mathématique, $\omega[k]$ est la vitesse de rotation gyrométrique et $dt$ est le pas d'échantillonnage.

Ainsi, le paramètre $\hat{u}[k]$ est calculé par les moyens de calcul comme la différence entre les caps magnétiques déterminés directement à partir des sorties magnétomètres pour les instants k+1 et k, à laquelle est soustraite la rotation prédite $\omega[k]dt$.

*Détermination du paramètre $\sigma_u$*

Le paramètre $\sigma_u$ représente l'image de la corrélation entre la perturbation au pas k et celle au pas k+1.

On peut choisir avantageusement de l'indexer sur la vitesse de déplacement (ou sur le déplacement entre deux instants d'échantillonnage successifs, ce qui est similaire) de manière à rendre compte de la corrélation spatiale des perturbations magnétiques.

On pourra par exemple prendre

$\sigma_u = c. \|v\|$ où c est un coefficient de réglage.

*Autre mode de mise en œuvre*

Dans un autre mode de mise en oeuvre, on combine différentes valeurs de cap magnétique, afin d'obtenir une valeur de variable dépendant du cap la moins possible entachée d'erreur liées aux perturbations magnétiques.

La variable que l'on cherche à déterminer est par exemple le cap moyen d'un morceau de trajectoire, d'autres variables dépendant du cap pouvant bien entendu être envisagées.

Pour cela, les moyens de calcul enregistrent, pour chaque pas d'échantillonnage $k$, la valeur du cap magnétique mesuré $z_\psi[k]$ et la valeur de la caractérisation du cap magnétique appelée $a[k]$, calculée comme une fonction monotone d'une norme du gradient.

Par exemple, $a[k] = a_0 + a_1\|\nabla B\|$

Le cap $\hat{\psi}_{[\![k_0,k_1]\!]}$ le plus probable pour le morceau de trajectoire défini entre deux instants d'échantillonnage $k = k_0$ et $k = k_1$ peut ainsi être posé sous la forme d'une optimisation

$$\hat{\psi}_{[\![k_0,k_1]\!]} = \operatorname*{argmin}_{\hat{\psi}} \sum_k {}^{1}\!/_{a[k]} \left\| z_\psi[k] - \hat{\psi} \right\|^2$$

où $\|.\|$ est une norme (L1, L2 ou autre).

L'algorithme d'optimisation mis en oeuvre par les moyens de calcul peut être de tout type adapté : descente de gradient, algorithme de Levenberg-Marquardt, ou algorithme de Metropolis-Hastings.

Par ailleurs, dans le cas de la norme L2, le problème est alors posé sous la forme d'un moindre carré et les moyens de calcul déterminent directement

$$\hat{\psi}_{[\![k_0,k_1]\!]} = \frac{\sum_{k_0}^{k_1} {z_\psi[k]}\Big/{a[k]}}{\sum_{k_0}^{k_1} \left({1}\Big/{a[k]}\right)}$$

On comprendra bien que cette valeur est beaucoup plus avantageuse que la valeur moyenne non pondérée par la valeur de caractérisation puisque les instants $k$ où la perturbation magnétique est la plus forte ont beaucoup moins d'impact dans la moyenne pondérée que dans la moyenne non pondérée.

**Revendications**

1.   Procédé de détermination de cap, dans lequel un champ magnétique est mesuré par au moins un magnétomètre (20) et un cap magnétique est déterminé à partir de ladite mesure et dans lequel des moyens de calcul (21, 31, 41) mettent en oeuvre un traitement calculant, pour chaque mesure de cap magnétique, une valeur de caractérisation du cap ainsi déterminé, **caractérisé en ce que** ladite valeur de caractérisation est une fonction monotone d'une norme du gradient du champ magnétique mesuré, ladite valeur étant utilisée dans la détermination du cap.

2.   Procédé selon la revendication 1, dans lequel les moyens de calcul (21, 31, 41) déterminent pour un instant d'échantillonnage donné

      - une estimation d'une prédiction de cap qui est fonction du cap déterminé à l'instant d'échantillonnage précédent,
      - un recalage du cap prédit ainsi estimé en fonction d'un cap magnétique déterminé à partir de mesures de magnétomètres,

      et dans lequel le recalage est déterminé en fonction de ladite valeur de caractérisation.

3.   Procédé selon l'une des revendications 1 et 2, dans lequel les moyens de calcul (21, 31, 41) déterminent une valeur d'une variable dépendant du cap en fonction d'une pluralité de caps magnétiques mesurés et de valeurs de caractérisation.

4.   Procédé selon la revendication 2, dans lequel, lors dudit recalage, les moyens de calcul (21, 31, 41) estiment l'amplitude du recalage en fonction :

      - d'un modèle d'évolution des perturbations magnétiques entre deux instants d'échantillonnage et
      - d'une estimation a priori de l'amplitude des perturbations.

5.   Procédé selon la revendication 2, dans lequel, pour un instant d'échantillonnage donné k+1, les moyens de calcul (21, 31, 41) estiment une perturbation de cap liée en calculant

$$\alpha[k](\psi^{(d)}[k] + \hat{u}[k]) + (1 - \alpha[k])\frac{\hat{u}[k]}{2} + v_{\psi^{(d)}}[k]$$

où

$$\alpha[k] = 1 - \frac{\sigma_u[k]^2}{2a[k]^2}$$

où $v_{\psi^{(d)}}$ est une variable aléatoire gaussienne de variance $a[k]^2(1 - \alpha[k]^2)$. k étant l'instant d'échantillonnage précédent,

$a[k]$ étant un paramètre qui représente l'amplitude a priori de la perturbation magnétique $\hat{u}$ et $\sigma_u$ étant deux paramètres calculés par les moyens de calculs comme une estimation de l'espérance et de la variance de l'évolution de la perturbation.

**6.** Procédé selon la revendication 5, dans lequel les moyens de calcul (21, 31, 41) estiment le paramètre $a[k]$ comme une fonction linéaire de la norme du gradient du champ magnétique.

**7.** Procédé selon l'une des revendications 5 et 6, dans lequel le paramètre $\hat{u}[k]$ est calculé par les moyens de calcul (21, 31, 41) comme la différence entre les caps magnétiques déterminés directement à partir des sorties magnétomètres pour les instants k+1 et k, à laquelle est soustraite une évolution de cap prédite ($\omega[k]dt$) où w[k] est une vitesse de rotation gyrométrique et dt est un pas d'échantillonnage.

**8.** Procédé selon l'une des revendications 5 à 7, dans lequel le paramètre $\sigma_u$ est estimé comme fonction de la vitesse de déplacement ou du déplacement entre deux instants d'échantillonnage successifs.

**9.** Procédé selon l'une des revendications 5 à 8, dans lequel le traitement met en oeuvre un filtrage Kalman dont l'état a au moins comme paramètre le cap réel et la perturbation de cap magnétique ($\psi, \psi^{(d)}$).

**10.** Procédé selon l'une des revendications précédentes, dans lequel la prédiction de cap est déterminée en fonction de mesures d'un ou plusieurs capteurs d'une centrale inertielle.

**11.** Dispositif de détermination de cap par des capteurs magnétiques, comportant des magnétomètres (20) et des moyens de calcul (21, 31, 41) pour le calcul du cap à partir du champ magnétique mesuré par lesdits magnétomètres, caractérisé en les moyens de calcul (21, 31, 41) mettent en oeuvre, pour différents instants d'échantillonnage successifs, le traitement du procédé selon l'une des revendications précédentes.

**12.** Système de navigation magnéto-inertielles comportant au moins un dispositif de mesure de champ magnétique selon la revendication 11.

**13.** Utilisation d'un système selon la revendication 12 dans des applications en environnement urbain ou à l'intérieur de bâtiments.

**14.** Produit programme d'ordinateur comprenant des instructions de code pour l'exécution d'un procédé de mesure de champ magnétique selon l'une des revendications 1 à 10, lorsque ledit programme est exécuté sur un ordinateur.

**15.** Moyen de stockage lisible par un équipement informatique sur lequel un produit programme d'ordinateur comprend des instructions de code pour l'exécution d'un procédé de mesure de champ magnétique selon l'une des revendications 1 à 10.

**Patentansprüche**

**1.** Verfahren zur Kursbestimmung, wobei ein Magnetfeld von mindestens einem Magnetometer (20) gemessen und ein Magnetkurs aus dieser Messung bestimmt wird und wobei Rechenmittel eine Verarbeitung durchführen, die für jede Magnetkursmessung einen Charakterisierungswert des so bestimmten Kurses berechnet, **dadurch gekennzeichnet, dass** dieser Charakterisierungswert eine monotone Funktion einer Norm des Gradienten des gemessenen Magnetfelds ist, wobei dieser Wert bei der Bestimmung des Kurses verwendet wird.

**2.** Verfahren nach Anspruch 1, wobei die Berechnungsmittel (21, 31, 41) für einen bestimmten Abtastzeitpunkt folgendes bestimmen:

- eine Schätzung einer Kursvorhersage, die vom Kurs abhängt, der zum vorherigen Abtastzeitpunkt bestimmt wurde,
- eine Neueinstellung des so bestimmten vorhergesagten Kurses in Abhängigkeit von einem anhand von Magnetometermessungen bestimmten Magnetkurses,

und wobei die Neueinstellung in Abhängigkeit von diesem Charakterisierungswert bestimmt wird.

**3.** Verfahren nach einem der Ansprüche 1 und 2, wobei die Berechnungsmittel (21, 31, 41) einen Wert einer kursabhängigen Variablen in Abhängigkeit von mehreren gemessenen Magnetkursen und Charakterisierungswerten bestimmen.

4. Verfahren nach Anspruch 2, wobei die Berechnungsmittel (21, 31, 41) bei der Neueinstellung die Amplitude der Neueinstellung schätzen in Abhängigkeit von:

   - einem Entwicklungsmodell der magnetischen Störungen zwischen zwei Abtastzeitpunkten und
   - einer Vorausschätzung der Amplitude der Störungen.

5. Verfahren nach Anspruch 2, wobei die Berechnungsmittel (21, 31, 41) für einen bestimmten Abtastzeitpunkt k+1 eine Kursstörung schätzen, verbunden mit der Berechnung von

$$\alpha[k](\psi^{(d)}[k] + \hat{u}[k]) + (1 - \alpha[k])\frac{\hat{u}[k]}{2} + v_{\psi^{(d)}}[k]$$

wobei

$$\alpha[k] = 1 - \frac{\sigma_u[k]^2}{2a[k]^2}$$

wobei $v_{\psi(d)}$ eine Gaußsche Zufallsvariable mit der

$$a[k]^2(1 - \alpha[k]^2).$$

Varianz ist
wobei k der vorherige Abtastzeitpunkt ist,
wobei $a[k]$ ein Parameter ist, der die a priori Amplitude der magnetischen Störung darstellt, wobei $\hat{u}$ und $\sigma_u$ zwei Parameter sind, die von den Berechnungsmitteln als Schätzung der Erwartung und der Varianz der Entwicklung der Störung berechnet werden.

6. Verfahren nach Anspruch 5, wobei die Berechnungsmittel (21, 31, 41) den Parameter $a[k]$ als lineare Funktion der Normalen des Magnetfeldgradienten schätzen.

7. Verfahren nach einem der Ansprüche 5 und 6, wobei der Parameter $\hat{u}[k]$ durch die Berechnungsmittel (21, 31, 41) als die Differenz zwischen den direkt aus den Magnetometerausgängen ermittelten Magnetkursen für die Zeitpunkte k+1 und k berechnet wird, von der eine vorausgesagte Kursentwicklung ($\omega[k]dt$) abgezogen wird, wobei $\omega[k]$ eine gyrometrische Drehgeschwindigkeit und dt ein Abtastschritt ist.

8. Verfahren nach einem der Ansprüche 5 bis 7, wobei der Parameter $\sigma_u$ entweder als Funktion der Bewegungsgeschwindigkeit oder der Verschiebung zwischen zwei aufeinanderfolgenden Abtastzeitpunkten geschätzt wird.

9. Verfahren nach einem der Ansprüche 5 bis 8, wobei die Verarbeitung eine Kalman-Filterung umsetzt, deren Zustand mindestens den Ist-Kurs und die Magnetkursstörung ($\psi$, $\psi^{(d)}$). zum Parameter hat.

10. Verfahren nach einem der vorhergehenden Ansprüche, wobei die Kursvorhersage in Abhängigkeit von Messungen eines oder mehrerer Sensoren eines inertialen Navigationssystems bestimmt wird.

11. Vorrichtung zur Bestimmung des Kurses durch magnetische Sensoren, die Magnetometer (20) und Berechnungsmittel (21, 31, 41) zur Berechnung des Kurses auf Grundlage des von den Magnetometern gemessenen Magnetfelds umfassen, **dadurch gekennzeichnet, dass** die Berechnungsmittel (21, 31, 41) für verschiedene aufeinanderfolgende Abtastzeitpunkte die Behandlung des Verfahrens nach einem der vorhergehenden Ansprüche durchführen.

12. Magnetisch inertiales Navigationssystem mit mindestens einer Magnetfeldmessvorrichtung nach Anspruch 11.

13. Einsatz eines Systems nach Anspruch 12 in Anwendungen in städtischer Umgebung oder in Gebäuden.

14. Computerprogrammprodukt mit Codeanweisungen zur Durchführung eines Magnetfeldmessverfahrens nach einem der Ansprüche 1 bis 10, wenn das Programm auf einem Computer ausgeführt wird.

**15.** Von einer EDV-Hardware lesbares Speichermedium, auf dem ein Computerprogrammprodukt Codeanweisungen zur Durchführung eines Magnetfeldmessverfahrens nach einem der Ansprüche 1 bis 10 enthält.

**Claims**

**1.** A method for determining heading, wherein a magnetic field is measured by at least one magnetometer (20) and a magnetic heading is determined from said measurement and wherein calculation means implement a processing calculating, for each magnetic heading measurement, a characterisation value of the heading thus determined, **characterised in that** said characterisation value is a monotonic function of a magnitude of the gradient of the measured magnetic field, said value being used in determining the heading.

**2.** The method according to claim 1, wherein the calculation means (21.31,41) determine for a given sampling time instant

- an estimate of a heading prediction that is a function of the heading determined at the previous sampling time instant,
- a resetting of the thus estimated predicted heading as a function of a magnetic heading determined from magnetometer measurements,

and wherein the resetting is determined as a function of said characterisation value.

**3.** The method according to one of claims 1 and 2, wherein the calculation means (21,31,41) determine a value of a heading-dependent variable as a function of a plurality of measured magnetic headings and characterisation values.

**4.** The method according to claim 2, wherein, during said resetting, the calculation means (21,31,41) estimate the amplitude of the resetting as a function of:

- a model of the course of magnetic disturbances between two sampling time instants and
- an a priori estimate of the amplitude of the disturbances.

**5.** The method according to claim 2, wherein, for a given sampling time instant k+1, the calculation means (21,31,41) estimate a related heading disturbance by calculating

$$\alpha[k](\psi^{(d)}[k] + \hat{u}[k]) + (1 - \alpha[k])\frac{\hat{u}[k]}{2} + v_{\psi^{(d)}}[k]$$

where

$$\alpha[k] = 1 - \frac{\sigma_u[k]^2}{2a[k]^2}$$

where $v_{\psi(d)}$ is a Gaussian random variable of variance

$$a[k]^2(1 - \alpha[k]^2).$$

k being the previous sampling time instant,
$a[k]$ being a parameter that represents the a priori amplitude of the magnetic disturbance $\hat{u}$ and $\sigma_u$ being two parameters calculated by the calculation means as an estimate of the expectation and the variance of the course of the disturbance.

**6.** The method of claim 5, wherein the calculation means (21,31,41) estimate the parameter $a[k]$ as a linear function of the magnitude of the gradient of the magnetic field.

**7.** The method according to one of claims 5 and 6, wherein the parameter $\hat{u}[k]$ is calculated by the calculation means (21,31,41) as the difference between the magnetic headings determined directly from the magnetometer outputs for the time instants k+1 and k, from which a predicted heading course is subtracted ($\omega$[k]$dt$) where $\omega$[k] is a gyrometric rotational speed and dt is a sampling interval.

8. The method according to one of claims 5 to 7, wherein the parameter $\sigma_u$ is estimated as a function of the speed of displacement or the displacement between two successive sampling time instants.

9. The method according to one of claims 5 to 8, wherein the processing implements Kalman filtering the state of which has, as a parameter, at least the actual heading and the magnetic heading disturbance ($\psi$, $\psi^{(d)}$).

10. The method according to one of the preceding claims, wherein the heading prediction is determined as a function of measurements of one or more sensors of an inertial unit.

11. A device for determining heading by magnetic sensors, comprising magnetometers (20) and calculation means (21,31,41) for calculating the heading from the magnetic field measured by said magnetometers, **characterised in that** the calculation means (21,31,41) implement, for different successive sampling time instants, the processing of the method according to one of the preceding claims.

12. A magneto-inertial navigation system comprising at least one magnetic field measurement device according to claim 11.

13. A use of a system according to claim 12 in applications in an urban environment or inside buildings.

14. A computer program product comprising code instructions for executing a magnetic field measurement method according to one of claims 1 to 10, when said program is executed on a computer.

15. A computing equipment readable storage means on which a computer program product comprises code instructions for the execution of a magnetic field measurement method according to one of claims 1 to 10.

FIG. 1

FIG. 2

100

101 — Estimation
par modèle
de prédiction

102 — Recalage

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **W. T. FAULKNER ; R. ALWOOD ; W. T. DAVID ; J. BOHLIN.** Gps-denied pedestrian tracking in indoor environments using an imu and magnetic compass. *Proceedings of the 2010 International Technical Meeting of The Institute of Navigation, (San Diego, CA,* Janvier 2010, 198-204
- **M. H. AFZAL ; V. RENAUDIN ; G. LACHAPELLE.** Magnetic field based heading estimation for pedestrian navigation environments. *2011 International Conférence on Indoor Positioning and Indoor Navigation, (Guimaraes, Portugal,* Septembre 2011

- Assessment of indoor magnetic field anomalies using multiple magnetometers. **M. H. AFZAL ; V. RENAUDIN ; G. LACHAPELLE.** Proceedings of the 23rd international technical meeting of the satellite division of the institute of navigation. The institute of navigation, 2010, 525-533
- **M.H. AFZAL ; V. RENAUDIN ; G. LACHAPELLE.** Assessment of Indoor Magnetic Field Anomalies using Multiple Magnetometers Assessment of indoor. *Proceedings of the 23rd International Technical Meeting of The Satellite Division of the Institute of Navigation (ION GNSS 2010),* 21 Septembre 2010